# EUROPEAN PATENT APPLICATION

(11) **EP 2 939 867 A1**
(43) Date of publication of application: **04.11.2015**
(21) Application number: 15248014.1
(22) Date of filing: 03.04.2015
(51) Int. Cl.: B60N 2/00, B60R 21/015

(54) **DIFFERENTIAL PRESSURE OCCUPANT DETECTION**

(30) Priority: 29.04.2014 US 201414264515
(71) Applicant: Delphi Technologies, Inc., Troy MI 48007 (US)
(72) Inventor: Griffin, Dennis P., Noblesville, IN 46062 (US); Curtis, Andrew H., Kokomo, IN 46902 (US)
(74) Representative: Delphi France SAS

(57) **Abstract**

An occupant detection system (12) is configured to classify an object that resides on a seat (10) of a vehicle. The system (12) includes a first bladder (22), a second bladder (24), and a differential pressure sensor (30). The first bladder (22) is configured to be disposed in a central area of a seat (10). The second bladder (24) is configured to be disposed in a peripheral area of the seat (10). The differential pressure sensor (30) is fluidicly coupled to the first bladder (22) and the second bladder (24) in a manner effective to determine a pressure difference between a first pressure of the first bladder (22) and a second pressure of the second bladder (24). In one configuration, the first bladder (22) and the second bladder (24) are configured so the pressure difference when a person sits on the seat (10) is greater than the pressure difference when a child-seat occupies the seat (10).

## Description

### TECHNICAL FIELD OF INVENTION

This disclosure generally relates to an occupant detection system, and more particularly relates to using a differential pressure sensor fluidicly coupled to a dual bladder weight transducer.

### BACKGROUND OF INVENTION

It is known to equip a seat of a vehicle with a bladder and then determine if the seat is occupied based on a pressure exhibited by the bladder. Occupant position and weight estimation systems are useful in connection with air bags and other pyrotechnically deployed restraints for purposes of determining whether, and how forcefully, to deploy the restraints. For example, deployment of an air bag can be disabled if the occupant is positioned in close proximity to the air bag cover, or if the seated weight of the occupant is indicative of an infant seat or a small child. A known weight estimation technique is to locate a fluid-filled bladder in or under a vehicle seat cushion, and to estimate the seated weight of the occupant based on the fluid pressure in the bladder; see U.S. Patent No. 5,987,370 and 6,246,936 to Murphy et al., and U.S. Patent No. 6,101,436 and 6,490,936 to Fortune et al., for example.

However, it has been observed that single bladder systems sometimes have difficulty distinguishing a child seat secured to the seat from an adult occupying the seat. U.S. Patent No. 6,578,871 to Gray et al. and U.S. Patent No. 6966233 to Brown disclose the use of a seat bladder having multiple fluid-filled chambers corresponding to different areas of the seat cushion. In general, fluid pressures in the various chambers of the bladder are individually measured and summed to form a composite pressure, or a difference in pressure may be calculated. However, it has been observed that there is some inherent inaccuracy due to the quantization of the analog signals of the multiple pressure sensors. The resolution and the linearity of the particular A/D converter add to this conversion error. In addition, each pressure sensor needs to be calibrated to some Engineering Units level (pressure, kPa, etc...). Typically, the millivolt signal of the sensor needs to be amplified, and some compensation for sensor voltage offset and the temperature dependencies of the sensor pressure signal needs to be provided. Based on the amplification/compensation electronic circuit as well as the calibration procedure, this is another area that can introduce various errors (especially in high volume manufacturing) that have to be considered when using multiple pressure sensors since all of these electronic conditioning circuits are inherently compromises between the ideal values needed and the resolution of the designs.

### SUMMARY OF THE INVENTION

In accordance with one embodiment, an occupant detection system configured to classify an object that resides on a seat of a vehicle is provided. The system includes a first bladder, a second bladder, and a differential pressure sensor. The first bladder is configured to be disposed in a central area of a seat. The second bladder is configured to be disposed in a peripheral area of the seat. The differential pressure sensor is fluidicly coupled to the first bladder and the second bladder in a manner effective to determine a pressure difference between a first pressure of the first bladder and a second pressure of the second bladder.

In another embodiment, the first bladder and the second bladder are configured so the pressure difference when a person sits on the seat is greater than the pressure difference when a child-seat occupies the seat.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle seat equipped with an occupant detection system in accordance with one embodiment; and
Fig. 2 is a top view of an occupant detection device configured to define two bladders for use in the system of Fig. 1 in accordance with one embodiment.

### DETAILED DESCRIPTION

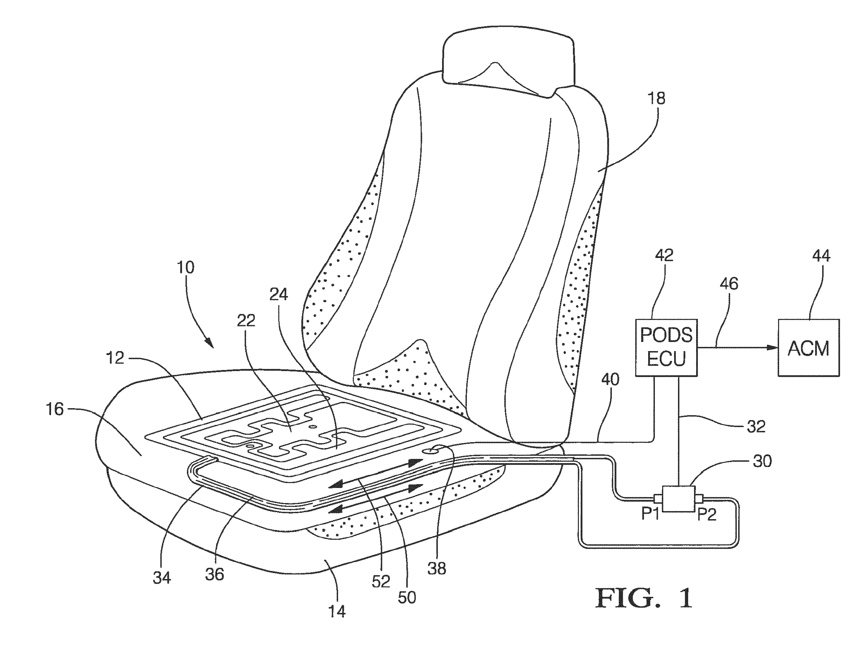

Fig. 1 illustrates a non-limiting example of a vehicle seat 10 that includes a frame 14 configured to support a seat cushion 16 and a back cushion 18. A fluid-filled occupant detection device, hereafter the device 12, is disposed in, on, or under the seat cushion 16 substantially parallel with the seating surface, and preferably contains a fluid such as silicone which is non-corrosive, and not subject to freezing at extreme ambient temperatures. In addition, interface panels may be placed above and/or beneath the device 12 to protect the device 12 from puncture damage and to provide a suitable reaction surface, as disclosed for example in the U.S. Patent No. 6,490,936, assigned to the assignee of the present invention, and incorporated herein by reference. In general, the pressure of the fluid in the device 12 provides an indication of weight on the device 12.

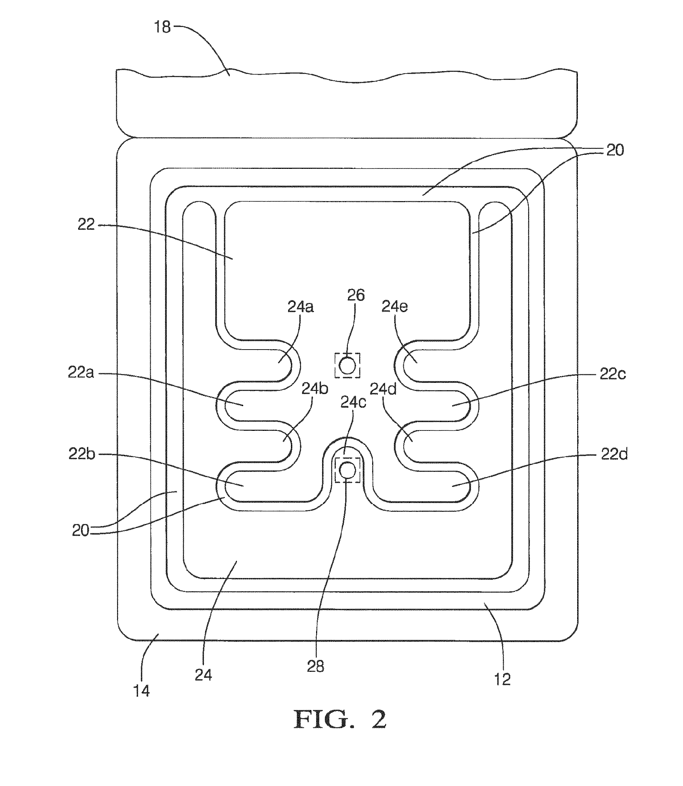

Fig. 2 further illustrates non-limiting details of the device 12 which may formed with two sheets of elastomeric material such as polyurethane or PELLETHANE® that are seam welded to form 20 and thereby define a first bladder 22 and a second bladder 24. These may be referred to herein as the central and peripheral chambers or bladders because they generally correspond to central and peripheral areas of the seat cushion 16. In this example, the first bladder 22 and the second bladder 24 are filled with silicone oil via respective exit ports 26 and 28, and the exit ports 26 and 28 are coupled to a differential pressure sensor that outputs 30 a differential pressure signal 32 based on a pressure difference between a first pressure line 34 and a second pressure line 36. As such, the a differential pressure sensor 30 is fluidicly coupled to the first bladder 22 and the second bladder 24 in a manner effective to determine a pressure difference between a first pressure P1 of the first bladder 22 and a second pressure P2 of the second bladder 24. The differential pressure sensor 30 is show as being located remote from the device 12 only for the purpose of illustration. It is contemplated that the differential pressure sensor 30 could be integrated into the device in order to eliminate the first pressure line 34 and the second pressure line 36.

Preferably, the device 12 is configured so the second pressure P2 in the second bladder 24 is primarily activated by the frame of a child or infant seat secured to the seat cushion 16, whereas the first pressure P1 in the first bladder 22 is primarily activated by a normally seated occupant. As such, for this example, the first bladder 22 and the second bladder 24 are configured so the pressure difference (P1 - P2) when a person sits on the seat is greater than the pressure difference when a child-seat occupies the seat 10. Indeed, the pressure difference may be negative (P1 - P2 < 0) when a child-seat occupies the seat 10. Optionally, the outboard portion of the first bladder 22 may have a plurality of extensions or fingers 22a, 22b, 22c, 22d that extend laterally outward toward the second bladder 24, and the forward portion of the second bladder 24 has a plurality of extensions or fingers 24a, 24b, 24c, 24d, 24e that extend inward toward the first bladder 22. The fingers 22a, 22b, 22c, 22d; and 24a, 24b, 24c, 24d are complementary and interdigitated or interlocked as shown for purposes of detecting occupant position as discussed in further detail below.

Referring again to Fig. 1, an occupant position and weight detection system that includes the device 12 may also include a seat temperature sensor 38 that provides a temperature signal 40 on a wire, for example. A differential pressure signal 32 and the temperature signal 40 are supplied to a passenger occupant detection system electronic control unit (PODS ECU) 42. The PODS ECU 42 characterizes the occupant of seat 10 based on the differential pressure signal 32 and the temperature signal 40, and provides a characterization signal to airbag control module (ACM) 44 via wire 46. The ACM 44 may be conventional in nature, and operates to deploy one or more airbags or other restraint devices (not shown) for vehicle occupant protection based on measured vehicle acceleration and occupant characterization data obtained from PODS ECU 42.

A primary function of PODS ECU 42 may be to estimate occupant seated weight and position based on the differential pressure signal 32 and the temperature signal 40, as described for example in the aforementioned U.S. Patent No. 6,578,871 to Gray et al., which is incorporated herein by reference. Ultimately, PODS ECU 42 characterizes the occupant, and provides a corresponding occupant status signal to ACM 44 as mentioned above. For example, the determined status may be EMPTY in the case of a vacant seat, OCCUPIED_DISABLE in the case of an infant or child seat or a normally seated child, or OCCUPIED_ENABLE in the case of an adult occupant with a seated weight that exceeds a calibrated threshold. In this regard, distinguishing between an infant or child seat and a normally seated adult is straight-forward since the first bladder 22 is primarily activated by a normally seated adult, and the second bladder 24 is primarily activated by an infant or child seat.

Gray et al. teaches that independent signals from independent pressure sensors measure pressures in the first bladder 22 and the second bladder 24, and those independent signals are summed to form a composite pressure reflective of the seated weight, and the composite pressure may be adjusted in a direction to favor restraint enablement when the pressure in the second bladder 24 indicates that the occupant is positioned in a peripheral region of the seat cushion 16. Brown teaches that independent signals from independent pressure sensors measure pressures in the first bladder 22 and the second bladder 24, and a difference of those independent signals are calculated to provide a classification of whatever is occupying the vehicle seat. However, in any A/D conversion, there is some inherent inaccuracy due to the quantization of the analog signals from the independent pressure sensors. As such, small differences between the first pressure P1 and the second pressure P2 may be difficult to resolve if the difference is small when atmospheric pressure is the reference pressure for both pressure sensors. Furthermore, the resolution and the linearity of the particular A/D converter add to this conversion error.

Each pressure sensor used by Grey or Brown needs to be calibrated to some Engineering Units level (pressure, kPa, etc...). Typically, the millivolt signal of the sensor needs to be amplified, and some compensation for sensor voltage offset and the temperature dependencies of the sensor pressure signal needs to be provided. Based on the amplification/compensation electronic circuit as well as the calibration procedure, this is another area that can introduce various errors (especially in high volume manufacturing) that have to be considered when using multiple pressure sensors since all of these electronic conditioning circuits are inherently compromises between the ideal values needed and the resolution of the designs. Rather than having two pressure sensors each with their own calibrations and subsequent A/D conversions, the system described herein needs only one pressure sensor calibration, and performs one A/D conversion, thereby minimizing these sources of error.

The improvement provided by the system configuration described herein is realized because the small pressure signal differences are removed from being referenced to atmospheric pressure, and instead are differentially processed in the analog domain of the differential pressure sensor 30 until the single A/D conversion is performed. This is an important distinction for the reasons cited above as well as with regard to a phenomenon sometimes referred to as hydraulic shock.

In addition to the atmospheric pressures acting on the independently measured pressures of the prior art, hydraulic shock is a consideration any time a non-compressible fluid is present on one side of a pressure sensor and the other side of the sensor is vented to atmosphere. External acceleration acting on the fluid can exceed the normal burst pressure rating of the sensor. This invention with proper routing of the pressure signals applies more similar external forces to opposite sides of a sensor diaphragm (not shown) of the differential pressure sensor 30. As a result, external acceleration(s) are common to both side of the sensor diaphragm, and these external forces as well as the atmospheric pressure appear on both sides of the differential pressure sensor 30 so the atmospheric pressure term in a difference equation is cancelled out. This greatly reduces the maximum burst pressure required by the single differential pressure sensor described herein versus using two pressure sensors vented to atmosphere.

Another advantage of using the differential pressure sensor 30 instead of processing two separate signals from two independent pressure sensors is that the 'Empty Seat' state exhibits a balanced pressure. In contrast, the non-differential configuration of the prior art exhibit a particular pressure value when the seat is empty that varies from seat to seat, and that value of pressure changes over time.

In order to minimize the burst pressure rating needed for the differential pressure sensor 30 when located remote from the first bladder 22 and the second bladder 24, it's advantageous if the first pressure line 34 and the second pressure line 36 are cooperatively configured to minimize an external acceleration induced differential pressure on the differential pressure sensor. For example, if a substantial portion of a first length 50 of the first the first pressure line 34 and a second length 52 of the second pressure line 36 are coupled to to form a twin tube. That is, the effects of external acceleration on the system 10 during operational events such as vehicle braking, and other system handling accelerations during non-operational events such as sensor-to-vehicle seat integration, vehicle seat repair, and/or normal service, are generally minimized if the routing of the lines or tubes between the first bladder 22, the second bladder 24, and the differential pressure sensor 30 are as similar as possible. By way of example and not limitation, such paired routing can be accomplished via adjacent twin tubes or coaxial tubes. As used herein, a substantial portion of the first length 50 and the second length 52 means that the first pressure line 34 and the second pressure line 36 are not separated to the extent possible until the connections proximate to the differential pressure sensor 30 and the bladders 22 and 24. If the routing of the first pressure line 34 and the second pressure line 36 are spaced apart and follow different paths, the separation could create the situation where the various accelerations suggested above acting on the fluid in the lines could induce a higher pressure on one side of the sensor and a lower pressure on the other side, potentially requiring a higher burst pressure value to avoid damage.

In summary, the present invention reliably provides a seat bladder for occupant classification (adult vs. child seat) that significantly enhances occupant position detection at a reduced overall system cost. While described in reference to the illustrated embodiments, it should be understood that various modifications will occur to persons skilled in the art. For example, the number, shape, and size of the chamber extensions may be different than shown, and so on. Thus, many variations are possible, and it will be understood that any of a number of configurations may fall within the scope of this invention, which is defined by the appended claims.

Accordingly, an occupant detection and classification system for a vehicle seat 10 is provided. By using the differential pressure sensor 30 to directly measure a pressure difference (e.g. P1 - P2); potential errors due to common mode shifts, quantization errors during analog to digital (A/D) conversion, and independent pressure sensor calibration errors are reduced.

While this invention has been described in terms of the preferred embodiments thereof, it is not intended to be so limited, but rather only to the extent set forth in the claims that follow.

## Claims

1. An occupant detection system (10) configured to classify an object that resides on a seat (10) of a vehicle, said system (10) comprising:
a first bladder (22) configured to be disposed in a central area of a seat (10);
a second bladder (24) configured to be disposed in a peripheral area of the seat (10); and
a differential pressure sensor (30) fluidicly coupled to the first bladder (22) and the second bladder (24) in a manner effective to determine a pressure difference between a first pressure of the first bladder (22) and a second pressure of the second bladder (24).

2. The system (10) in accordance with claim 1, wherein the first bladder (22) and the second bladder (24) are configured so the pressure difference when a person sits on the seat (10) is greater than the pressure difference when a child-seat (10) occupies the seat (10).

3. The system (10) in accordance with claim 1 or 2, wherein the first bladder (22) is fluidicly coupled to the differential pressure sensor by a first pressure line (34) and the second bladder (24) is fluidicly coupled to the differential pressure sensor by a second pressure line (36), wherein the first pressure line (34) and the second pressure line (36) are cooperatively configured to minimize an external acceleration induced differential pressure on the differential pressure sensor.

4. The system (10) in accordance with claim 3, wherein the first pressure line (34) and the second pressure line (36) are coupled together along a substantial portion of a first length (50) of the first the first pressure line (34) and a second length (52) of the second pressure line (36) to form a twin tube.
